# EUROPEAN PATENT APPLICATION

(11) **EP 2 784 860 A1**
(43) Date of publication of application: **01.10.2014**
(21) Application number: 12851061.7
(22) Date of filing: 20.11.2012
(51) Int. Cl.: H01M 4/587, C01B 31/16, H01M 4/36, H01M 10/0525, H01M 10/0566

(54) **NEGATIVE-ELECTRODE MATERIAL FOR NONAQUEOUS ELECTROLYTE SECONDARY BATTERY, AND METHOD FOR PRODUCING SAME**

(30) Priority: 24.11.2011 JP 2011256575
(71) Applicant: Mitsubishi Corporation, Tokyo 100-8086 (JP); Kyushu University, Higashi-ku Fukuoka-shi, Fukuoka 812-8581 (JP)
(72) Inventor: YAMAMOTO, Takehiro, Tokyo 100-8086 (JP); YAGISHITA, Yohei, Tokyo 100-8086 (JP); KUROKAWA, Ryo, Tokyo 100-8086 (JP); YAO, Jae-Seong, Fukuoka-shi Fukuoka 812-8581 (JP); MIYAWAKI, Jin, Fukuoka-shi Fukuoka 812-8581 (JP); MOCHIDA, Isao, Fukuoka-shi Fukuoka 812-8581 (JP); YOON, Seong-Ho, Fukuoka-shi Fukuoka 812-8581 (JP)
(74) Representative: Regimbeau
(86) International application number: PCT/JP2012/080082
(87) International publication number: WO 2013/077325

(57) **Abstract**

There is provided a negative-electrode material for rechargeable batteries with a nonaqueous electrolyte which have a high charge/discharge capacity and excellent rate characteristics. The negative-electrode material for rechargeable batteries with a nonaqueous electrolyte comprises: carbon material having a carbon atom content of not less than 98.0% in terms of mass and a lattice spacing (d₀₀₂) of not more than 3.370 angstroms in the C-axis direction; and a boron compound represented by general formula HₓBO_{y} wherein x represents a real number of 0 to 1.0; and y represents a real number of 1.5 to 3.0, wherein the boron compound is bonded to a portion of the carbon atoms of the carbon material.

## Description

### Technical Field

The present invention relates to a negative-electrode material for rechargeable batteries with a nonaqueous electrolyte, such as lithium-ion rechargeable batteries. More specifically, the present invention relates to a negative-electrode material that can provide rechargeable batteries with a nonaqueous electrolyte, the rechargeable batteries having high rate discharge characteristics.

### Background of the Invention

Lithium-ion rechargeable batteries that are rechargeable batteries with a nonaqueous electrolyte, the rechargeable batteries comprising a negative electrode formed of a carbon material that functions as a host capable of reversibly occluding and releasing lithium ions, and an electrolysis solution composed of an organic solvent solution of a lithium salt, have rapidly expanded use as small-size rechargeable batteries that cause little or no self-discharge and have high electromotive force and energy density mainly in power supplies for mobile devices and electric vehicles.

Negative electrodes formed of metallic lithium have a very high theoretical capacity of about 3800 mAh/g, whereas, in negative electrodes formed of a carbon material, the theoretical capacity of LiC₆ that is an intercalation compound comprising lithium ions densely stored between layers in graphite is 372 mAh/g that is considered to be a limit capacity. That is, the capacity is one order of magnitude lower than that of the metallic lithium. Lithium-ion rechargeable batteries using a carbon material as a negative-electrode material have been developed and have become currently spread, because dendrite precipitation during charging that is unavoidable in negative electrodes formed of metallic lithium does not occur.

Carbon materials used in negative electrodes for lithium-ion rechargeable batteries include crystalline natural and artificial graphites, soft carbons that are precursors of artificial graphites, and hard carbons that, even when treated at high temperatures, are not converted to graphites. Soft carbons or hard carbons are obtained by heat-treating organic materials such as pitch or resins at about 1000°C in an inert atmosphere until volatile matter is completely volatilized. In particular, hard carbons are materials that have a low-crystallinity and noncrystalline structure. On the other hand, graphites are obtained by purifying naturally occurring graphite or by heat-treating soft carbon at a temperature of about 2500°C or above. In any event, a negative electrode is formed by molding a powdered material usually using a small amount of a binder and pressure-bonding the molded product to an electrode substrate that functions as a current collector.

As described above, the limit capacity of the negative electrode using graphite is 372 mAh/g. Since, however, for example, surface active sites that inhibit the penetration of lithium ions, or an invalid region to the store of lithium ions are present, the actual discharge capacity is considerably lower than the limit capacity of 372 mAh/g. For this reason, various attempts have been made to bring the capacity to the limit capacity.

Increasing the degree of graphitization of the carbon material is important for an increase in capacity of the negative-electrode material. Boron is known to function as a graphitized catalyst that accelerates the graphitization of the carbon material. For example, Japanese Patent Application Laid-Open No. 245548/1991 (Patent document 1) proposes a carbonaceous material obtained by carbonizing an organic resin with 0.1 to 2% by the mass of boron added thereto. Further, Japanese Patent Application Laid-Open No. 149947/2000 (Patent document 2) proposes a negative-electrode material obtained by adding a boron compound to pitch and heat-treating the mixture at an elevated temperature for graphitization. Furthermore, Japanese Patent Application Laid-Open No. 31422/1996 (Patent document 3) proposes a carbon powder that has been obtained by adding a boron compound to a carbon powder and subjecting the mixture to graphitization at 2500°C or above and has excellent discharge capacity and charge and discharge efficiency.

### PRIOR ART DOCUMENTS

### Patent Documents

Patent document 1: Japanese Patent Application Laid-Open No. 245548/1991
Patent document 2: Japanese Patent Application Laid-Open No. 149947/2000
Patent document 3: Japanese Patent Application Laid-Open No. 31422/1996

### [SUMMARY OF THE INVENTION]

### Problems to be Solved by the Invention

Rechargeable batteries with a nonaqueous electrolyte used in electric vehicles or other applications are required to have excellent charge and discharge characteristics even under high-load conditions. The rechargeable batteries with a nonaqueous electrolyte that have the so-called high-rate discharge properties have been desired. As described above, increasing the degree of graphitization of a carbon material can advantageously improve the charge and discharge capacity of rechargeable batteries to enhance the energy density. Such rechargeable batteries are unsatisfactory in light of high rate discharge properties.

The present inventors have now found that a negative-electrode material having excellent discharge rate characteristics while maintaining an excellent charge and discharge capacity can be realized by heat-treating a mixture at a low temperature, the mixture having been obtained by adding a boron compound to a carbon material having a satisfactorily high degree of graphitization. The present invention has been made based on such finding.

Accordingly, an object of the present invention is to provide a negative-electrode material for rechargeable batteries with a nonaqueous electrolyte which have a high charge and discharge capacity and excellent rate characteristics.

### Means for Solving the Problems

According to an aspect of the present invention, there is provided a negative-electrode material for rechargeable batteries with a nonaqueous electrolyte comprising: a carbon material having a carbon atom content of not less than 98.0% in terms of mass and a lattice spacing (d₀₀₂) of not more than 3.370 angstroms in the C-axis direction; and a boron compound represented by general formula HₓBO_{y} wherein x represents a real number of 0 to 1.0; and y represents a real number of 1.5 to 3.0, wherein the boron compound is bonded to a portion of the carbon atoms of the carbon material.

In the negative-electrode material for rechargeable batteries with a nonaqueous electrolyte according to an embodiment of the present invention, the content of the boron compound is in the range of 0.1 to 5.0% in terms of the mass of boron atom based on the carbon material.

In the negative-electrode material for rechargeable batteries with a nonaqueous electrolyte according to an embodiment of the present invention, the carbon material may be a natural graphite or an artificial graphite, the artificial graphite having been obtained by heat-treating a hydrocarbon compound at a temperature of 2000°C or above.

The negative-electrode material for rechargeable batteries with a nonaqueous electrolyte according to an embodiment of the present invention may have a structure that carbon atoms of the carbon material are bonded to oxygen atoms of the boron compound through a covalent bond.

According to another aspect of the present invention, there is provided a process for producing a negative-electrode material for rechargeable batteries with a nonaqueous electrolyte, the process comprising:
mixing a carbon material having a carbon atom content of not less than 98.0% in terms of mass and a lattice spacing (d₀₀₂) of not more than 3.370 angstroms in the C-axis direction, with boric acid and kneading the mixture; and
heat-treating the mixture at a temperature of room temperature to 1400°C.

In the process for producing a negative-electrode material for rechargeable batteries with a nonaqueous electrolyte according to an embodiment of the present invention, the heat treatment may be carried out under vacuum or an inert gas atmosphere.

In the process for producing a negative-electrode material for rechargeable batteries with a nonaqueous electrolyte according to an embodiment of the present invention, boric acid is dehydrated by the heat treatment to form a boron compound represented by general formula: HₓBO_{y} wherein x represents a real number of 0 to 1.0; and y represents a real number of 1.5 to 3.0.

According to further aspects of the present invention, there are provided a negative electrode for a rechargeable battery with a nonaqueous electrolyte, the negative electrode comprising a material obtained by the above, and a rechargeable battery with a nonaqueous electrolyte, the rechargeable battery comprising: a positive electrode; an electrolyte layer containing a nonaqueous electrolysis solution; and a negative electrode, wherein the negative electrode is the above negative electrode.

### Effect of the Invention

The present invention can realize a negative-electrode material for rechargeable batteries with a nonaqueous electrolyte, the negative-electrode material having a high charge and discharge capacity and excellent rate characteristics.

### [BRIEF DESCRIPTION OF THE DRAWINGS]

Fig. 1 is an FT-IR spectrum of a negative-electrode material obtained in Example 1.
Fig. 2 is a scanning electron photomicrograph of a negative-electrode material obtained in Example 1.
Fig. 3 is a graph showing a relationship between a discharge capacity and each heat treatment temperature for a rechargeable battery (addition amount of boric acid: 5%) obtained in Example 1.
Fig. 4 is a graph showing a relationship between a discharge capacity and each heat treatment temperature for a rechargeable battery (addition amount of boric acid: 3%) obtained in Example 1.
Fig. 5 is an FT-IR spectrum of a negative-electrode material obtained in Example 2.
Fig. 6 is a graph showing a relationship between a discharge capacity and each heat treatment temperature for a rechargeable battery (addition amount of boric acid: 3%) obtained in Example 2.
Fig. 7 is a graph showing a relationship between a discharge capacity and each heat treatment temperature for a rechargeable battery (addition amount of boric acid: 3%) obtained in Example 3.

### [MODE FOR CARRYING OUT THE INVENTION]

The negative-electrode material for rechargeable batteries according to the present invention comprises a carbon material and a boron compound as indispensable ingredients. At the outset, the carbon material will be described.

In the present invention, a carbon material having a high degree of graphitization is used. That is, a carbon material is used that has a carbon atom content of not less than 98.0% in terms of mass and a lattice spacing (d₀₀₂) of not more than 3.370 angstroms in the C-axis direction. The lattice spacing (d₀₀₂) means a distance between plane lattices in the C-axis direction of the carbon material that is measured by X-ray diffractometry. In carbon materials having a low degree of graphitization that have a lattice spacing of more than 3.370 angstroms, the crystallinity is unsatisfactory, making it impossible to realize a high discharge capacity.

The natural graphite has a lattice spacing of 3.354 angstroms in the C-axis direction. Also in the artificial graphite, the lattice spacing in the C-axis direction decreases and comes close to 3.354 angstroms with an increase in the degree of graphitization. The degree of graphitization is likely to increase with a rise in heat treatment temperature and with an increase in heat treatment time. In addition to the natural graphite, artificial graphites and kish graphites that have hitherto been used may be used as carbon materials having a carbon atom content of not less than 98.0% in terms of mass and a lattice spacing of not more than 3.370 angstroms in the C-axis direction. For example, one or at least two of carbon materials such as hard carbons, soft carbons, pyrolytic carbons, cokes, glassy carbons, calcined bodies of organic polymer compounds, activated carbons, or carbon blacks may be used. These carbon materials are obtained by graphitizing hydrocarbon compounds, and the graphitization is generally carried out by heat-treating hydrocarbon compounds at a temperature of 1500 to 3000°C. When the graphitization temperature is 2000°C or above, the carbon materials having a lattice spacing of not more than 3.370 angstroms in the C-axis direction can be obtained.

Among the carbon materials, natural graphites are preferred. Natural graphites are more inexpensive than artificial graphites and have a high charge and discharge capacity but are unsatisfactory in discharge characteristics under high load conditions and thus have not hitherto been used as negative-electrode materials for rechargeable batteries that are required to have high rate characteristics. In the present invention, however, as described below, when a mixture of the natural graphite with the boron compound is heat-treated at a specific temperature, the boron compound is bonded to a portion of carbon atoms in the carbon material and, consequently, significantly improved characteristics can be obtained.

The negative-electrode material according to the present invention is obtained by heat-treating a mixture at a temperature of room temperature to 1400°C, the mixture having been obtained by mixing the carbon material with the boron compound. In order to bring the lattice spacing to that of the natural graphite, a method has been adopted in which a boron compound is added to a precursor of pitch, tar or the like, followed by heat treatment of the mixture at an elevated temperature (1500°C to 3000°C). The heat treatment at the elevated temperature causes the decomposition of the boron compound that in its turn causes the replacement of a portion of carbon elements in the graphite with boron element. The purpose of the heat treatment is to reduce four-coordinate carbon elements of a carbon network through replacement with a boron element that is a three-coordinate element, thereby obtaining an artificial graphite having a small lattice spacing. By contrast, in the present invention, rate characteristics can be significantly improved while maintaining a high charge and discharge capacity by previously adding the boron compound to a graphite having a lattice spacing of not more than 3.370 angstroms that is a highly graphitized carbon material and heat-treating the mixture at a low temperature. The reason for this has not been elucidated yet but is believed to be as follows.

In the present invention, the boron compound bonded to a portion of carbon atoms in the carbon material is represented by general formula: HₓBO_{y} wherein x represents a real number of 0 to 1.0; and y represents a real number of 1.5 to 3.0. It is considered that the following structure is formed by covalent bonding of oxygen atoms in the boron compound with a portion of carbon atoms at the end face of a graphene layer in the graphite.

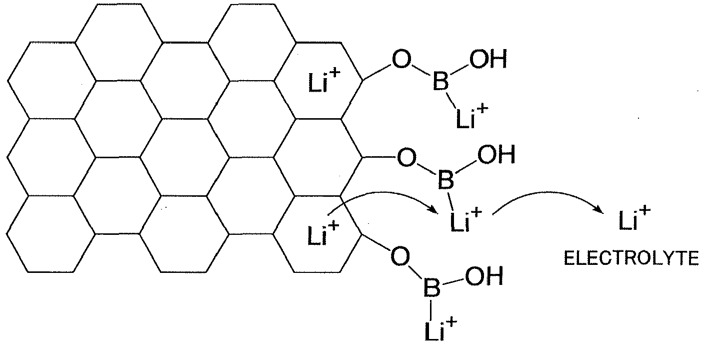

In the boron compound that is bonded to a portion of carbon atoms at the end of the graphene layer in the graphite and is represented by general formula: HₓBO_{y}, since the boron atom has an unshared electron pair, when lithium ions are released from a negative electrode to an electrolysis solution, intercalated lithium ions are moved through boron atoms. That is, the boron compound functions as a mobile channel of lithium ions. As a result, it is considered that lithium ions are efficiently released even under high load conditions in which the amount of current is large, contributing to improved discharge rate characteristics. It should be noted that the above logical observation is hypothetical and the present invention is not bound by the above theory.

The content of the boron compound to the carbon material is preferably in the range of 0.1 to 5.0% in terms of the mass of boron atom. When the content of the boron compound is less than 0.1 % in terms of the mass of boron atom, the number of boron atoms having an unshared electron pair is small and, in some cases, the boron compound does not function as a mobile channel of the lithium ions. On the other hand, when the content of the boron compound exceeds 5% in terms of the mass of boron atom, the content of the graphite carbon per unit mass of the negative-electrode material decreases and, thus, the discharge capacity disadvantageously decreases. Further, the initial efficiency (ratio between discharge capacity and charge capacity) also disadvantageously lowers. That is, the amount of charge decreases with a decrease in the proportion of the graphite that is a charge site. Further, when the content of the boron compound is excessive, the initial efficiency lowers. For example, when the content of the boron compound in terms of the mass of the boron atom is 7%, the discharge capacity (0.1C rate) decreases to 266 mAh/g and the initial efficiency is disadvantageously brought to 62.8%.

Next, a process for producing the negative-electrode material for rechargeable batteries with a nonaqueous electrolyte will be described. The process for producing the negative-electrode material for rechargeable batteries with a nonaqueous electrolyte according to the present invention includes mixing and kneading the carbon material with boric acid and heat-treating the mixture at a temperature of room temperature to 1400°C.

Orthoboric acid (H₃BO₃), metaboric acid (HBO₂), and hypoboric acid (H₂B₄O₇) are preferred as the boric acid. These boric acids, when heat-treated at an elevated temperature of 1500 to 3000°C, are thermally decomposed, and the boron atom is replaced with a portion of carbon atoms constituting a graphene layer of the graphite to form the following structure. Accordingly, since the mobile channel of the lithium ions is not formed, the charge rate characteristics are not improved.

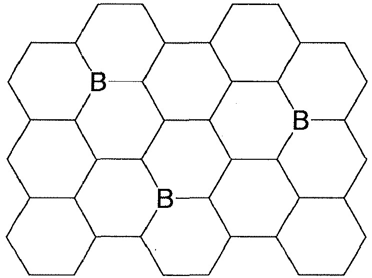

On the other hand, the boric acid, when heat-treated at or below the thermal decomposition temperature, is dehydrated. For example, it is known that orthoboric acid, when heat-treated at the temperature, causes the following dehydration.

4H₃BO₃ → 4H₂O + 4HBO₂

4H₃BO₃ → 5H₂O + H₂B₄O₇

4H₃BO₃ → 6H₂O + 2B₂O₃

When the temperature of the heat treatment is above 1400°C, the boric acid is oxidized to boron oxide (B₂O₃) and is further converted to boron carbide and, thus, the mobile channel of the lithium ions is not formed. Accordingly, the heat treatment should be carried out at a temperature of 1400°C or below. The heat treatment temperature is preferably 1000°C to 1200°C. The discharge rate characteristics can be further improved by heat-treating a mixture of a carbon material with boric acid in this temperature range.

When a boric acid is added to and kneaded with a carbon material having a carbon atom content of 100% in terms of mass and a lattice spacing (d₀₀₂) of 3.370 angstroms in the C-axis direction (for example, natural graphite), conventional publicly known kneaders can be used. For example, when the mixture is kneaded with a kneader such as a ball mill, heat is generated by friction between a stirrer and the mixture. A negative electrode is prepared using the negative-electrode material by coating a current collector with a water-soluble coating liquid prepared by adding suitable solvent and binder to the negative-electrode material which will be described later. In the preparation of the negative electrode, the coating film is dried to evaporate water in the coating liquid. It is considered that heat during the above step also causes dehydration of boric acid and covalent bond occurs between carbon atoms in the natural graphite and oxygen atoms in the boron compound.

The heat treatment of the mixture of the carbon material with boric acid is preferably carried out under vacuum or under an inert gas atmosphere such as a nitrogen or argon atmosphere. Under an oxygen atmosphere, the carbon material (graphite) is sometimes oxidized even at a temperature of 1400°C or less.

Next, the rechargeable battery using the negative-electrode material will be described by taking a lithium ion rechargeable battery as an example. The lithium ion rechargeable battery essentially has a battery mechanism in which lithium ions are occluded in a negative electrode during charging and discharging, while, at the time of discharge, the lithium ions are released from the negative electrode. The lithium ion rechargeable battery generally comprises a negative electrode, a positive electrode, and a nonaqueous electrolyte as main constituent elements of the battery, wherein the positive and negative electrodes each are formed of a material capable of forming a bonded body of lithium ions and an intercalation compound, and the entry of lithium ions into and exit of lithium ions from the negative electrode in the charge and discharge process are carried out between graphene layers constituting the graphite. The constituent elements of the lithium ion rechargeable battery may be the same as those of general lithium rechargeable batteries, except that the above electrode material is used.

A negative electrode can be prepared, for example, by mixing and kneading the negative-electrode material with a powder of a rubbery polymer such as styrene-butadiene rubber or a resin polymer such as carboxymethylcellulose in a solvent such as water and then coating the kneaded product on a current collector. Alternatively, the negative electrode may be formed by hot pressing within a mold. The shape of the current collector used in the negative electrode is not particularly limited, and examples thereof include foils or network structures such as meshes and expanded metals. Examples of such current collectors include copper, stainless steel, and nickel. The thickness of the current collector is preferably approximately 5 to 20 µm for foils.

Examples of positive electrode active materials usable herein include lithium-containing transition metal oxides LiM¹₁₋ₓM²ₓO₂ or LiM¹_{2y}M²_{y} O₄ wherein X is a numerical value of 0 ≤ X ≤ 4; Y is a numerical value of 0 < Y ≤ 1; M¹ and M² represent a transition metal and are at least one of Co (cobalt), Ni (nickel), Mn (manganese), Cr (chromium), Ti (titanium), V (vanadium), Fe (iron), Zn (zinc), Al (aluminum), In (indium), and Sn (tin), transition metal chalcogenides, vanadium oxides (for example, V₂O₅, V₆O₁₃, V₂O₄, and V₃O₈) and lithium compounds thereof, Chevrel phase compounds represented by general formula MₓMo₆S_{8-y} wherein X is a numerical value of 0 ≤ X ≤ 4; Y is a numerical value of 0 ≤ Y ≤ 1; and M represents a metal including transition metals, activated carbons, and activated carbon fibers.

Any organic solvent may be used in the nonaqueous electrolyte without particular limitation, and examples thereof include propylene carbonate, ethylene carbonate, dimethyl carbonate, diethyl carbonate, 1,1-dimethoxyethane, 1,2-dimethoxyethane, 1,2-diethoxyethane, γ-butyrolactam, tetrahydrofuran, 1,3-dioxolane, 4-methyl-1,3-dioxolane, anisole, diethyl ether, sulfolane, methylsulfolane, acetonitrile, chloronitrile, propionitrile, trimethyl borate, tetramethyl silicate, nitromethane, dimethylformamide, N-methylpyrrolidone, ethyl acetate, trimethyl-o-formate, and nitrobenzene. A mixture of two or more of them may also be used.

Organic or inorganic lithium compounds soluble in organic solvents used may be used as the lithium compound in the electrolyte. Specific examples of suitable lithium compounds include LiClO₄, LiBF₄, LiPF₆, LiAsF₆, LiB(C₆H₅), LiCl, LiBr, LiCF₃SO₃, and LiCH₃SO₃. A mixture of two or more of them may also be used.

In the lithium ion rechargeable battery, a separator may also be used. The separator is not particularly limited, and examples thereof include microporous membranes of woven fabrics, nonwoven fabrics, and synthetic resins. Microporous membranes of synthetic resins are particularly suitable. Among them, microporous membranes of polyolefins are suitable in light of thickness, membrane strength, and membrane resistance. Microporous membranes formed of polyethylene and polypropylene or microporous membranes formed of composites of these materials may be mentions as specific examples thereof.

Any structure may be adopted in the lithium ion rechargeable battery according to the present invention. The shape and geometry of the lithium ion rechargeable battery are not particularly limited, and any of cylindrical, angular, coin, button, or other butteries may be selected. In order to obtain a hermetically sealed battery with a nonaqueous electrolyte having a higher safety, preferably, the battery is provided with a unit that, in an abnormal state such as overcharge, senses a rise in internal pressure of the battery and interrupts current.

### [EXAMPLES]

The present invention is further illustrated by the following Examples that are not intended as a limitation of the invention. "%" is by mass unless otherwise specified.

### Example 1: Negative-electrode material using natural graphite

A product obtained by adding boric acid (manufactured by Sigma-Aldrich Co.) to a natural graphite having a carbon atom content of not less than 99.995% in terms of mass and a lattice spacing (d₀₀₂) of 3.354 angstroms in the C-axis direction and kneading the mixture in a ball mill was heat-treated for doping with boron. Boron doping amount was 5% in terms of the mass of the boron atom based on the natural graphite. The natural graphite mixed with boric acid was heat-treated at 200°C, 300°C, 500°C, 1000°C, 1200°C, 1500°C, 1800°C, 2000°C, 2400°C, and 2800°C to obtain negative-electrode materials. Separately, a mixture was prepared in the same manner as described above, except that the addition amount of boric acid was 3% in terms of the atomic mass of boron. The mixture was heat-treated at 1000°C and 1200°C to obtain negative-electrode materials.

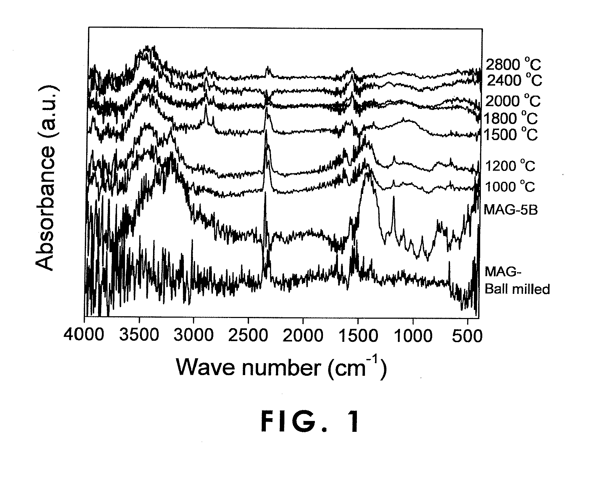

For the negative-electrode materials thus obtained, infrared spectral characteristics were measured with a Fourier transformation infrared spectrophotometer (FT-IR MB-series, manufactured by ABB Bomen Inc.). The results were as shown in Fig. 1. As is also apparent from Fig. 1, for the negative-electrode materials subjected to heat treatment at 1500°C or above, it was confirmed that a peak derived from O-H bond of boric acid (3226 cm⁻¹), a peak derived from B-O bond (1413 cm⁻¹), an in-plane peak derived from B-OH (1193 cm⁻¹), and an out-of-plane peak derived from B-OH (781 cm⁻¹) disappeared. On the other hand, for the negative-electrode materials subjected to heat treatment at 1500°C or below, a peak derived from B=O bond of boron oxide (1583 cm⁻¹) and a peak derived from B-C bond (1265 cm⁻¹) were confirmed.

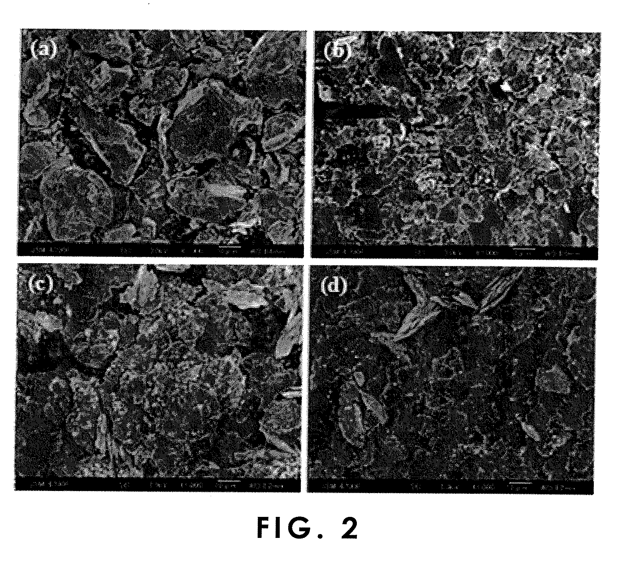

The surface morphology of four samples, that is, (a) a natural graphite before the addition of boric acid, (b) a mixture of the natural graphite with boric acid as an additive, (c) a negative-electrode material obtained by heat-treating the mixture at 1000°C, and (d) a negative-electrode material obtained by heat-treating the mixture at 1500°C, were observed under an electron microscope (JSM-6700F, manufactured by Japan Electric Optical Laboratory). The results of the observation were as shown in Fig. 2. Electron photomicrographs shown in Fig. 2 revealed that, for the boric acid-added mixture (b) and the sample obtained by heat-treating the mixture at 1000°C (c), the presence of the boron compound on the surface could be confirmed, while, for the sample obtained by heat-treating the mixture at 1500°C (d), the presence of the boron compound on the surface could not be confirmed and, instead, the presence of boron carbide could be confirmed.

Next, the performance of electrodes prepared from the negative-electrode materials was evaluated as follows. Coin-type rechargeable batteries were prepared by preparing a working electrode (WE) from the negative-electrode material, preparing a counter electrode (CE) and a reference electrode (RE) from lithium metal, and using, as an electrolysis solution, a solution prepared by dissolving LiPF₆ as an electrolyte salt in a mixed solvent composed of ethylene carbonate and dimethyl carbonate at a ratio of 1 : 1 (concentration of electrolyte salt: 1 mol/dm³). Rate characteristics of the rechargeable batteries thus obtained were examined as follows.

For the rechargeable batteries thus obtained, a constant-current charge and discharge test was carried out. The discharge capacity was determined by charging the battery at a current density of 37.2 mA/g (corresponding to 0.1C) until the potential against lithium reference electrode (vs Li/Li⁺) reaches 0.0 V, and then discharging the battery at the same current density until the potential against lithium reference electrode (vs Li/Li⁺) reaches +1.50 V. Further, the discharge capacity was determined in the same manner as described above, except that the current density was changed to 74.4 mA/g (corresponding to 0.2C), 186.0 mA/g (corresponding to 0.5C), 372.0 mA/g (corresponding to 1.0C), 744 mA/g (corresponding to 2.0C), and 1860 mA/g (corresponding to 5.0C). The results of evaluation were as shown in Tables 1 and 2 below. The boron content in the tables means a boron content in terms of the mass of boron atom based on the artificial graphite (HDPC).

**TABLE 1**

| Boron content (%) | Heat treatment temp. (°C) | Rate characteristics | | | | | |
|---|---|---|---|---|---|---|---|
| | | 0.1C | 0.2C | 0.5C | 1.0C | 2.0C | 5.0C |
| 0 | 25 | 368 | 368 | 362 | 343 | 279 | 151 |
| 5 | 25 | 309 | 309 | 307 | 303 | 292 | 241 |
| 5 | 200 | 310 | 309 | 308 | 306 | 300 | 273 |
| 5 | 300 | 330 | 330 | 328 | 322 | 311 | 265 |
| 5 | 500 | 310 | 309 | 305 | 298 | 285 | 225 |
| 5 | 1000 | 351 | 352 | 350 | 348 | 346 | 330 |
| 5 | 1200 | 378 | 377 | 376 | 373 | 367 | 322 |
| 5 | 1500 | 340 | 341 | 332 | 296 | 209 | 116 |
| 5 | 1800 | 337 | 341 | 333 | 283 | 187 | 101 |
| 5 | 2000 | 336 | 340 | 333 | 291 | 199 | 107 |
| 5 | 2400 | 348 | 349 | 341 | 299 | 202 | 108 |
| 5 | 2800 | 344 | 335 | 269 | 191 | 131 | 72 |

**TABLE 2**

| Boron content (%) | Heat treatment temp. (°C) | Rate characteristics | | | | | |
|---|---|---|---|---|---|---|---|
| | | 0.1C | 0.2C | 0.5C | 1.0C | 2.0C | 5.0C |
| 0 | 25 | 368 | 368 | 362 | 343 | 279 | 151 |
| 3 | 1000 | 357 | 356 | 354 | 349 | 336 | 260 |
| 3 | 1200 | 366 | 366 | 364 | 356 | 336 | 241 |
| 3 | 1500 | 342 | 343 | 333 | 269 | 180 | 100 |
| 3 | 1800 | 348 | 349 | 340 | 308 | 216 | 117 |
| 3 | 2000 | 351 | 350 | 338 | 292 | 197 | 106 |
| 3 | 2400 | 351 | 351 | 342 | 297 | 205 | 108 |
| 3 | 2800 | 332 | 331 | 279 | 192 | 126 | 64 |

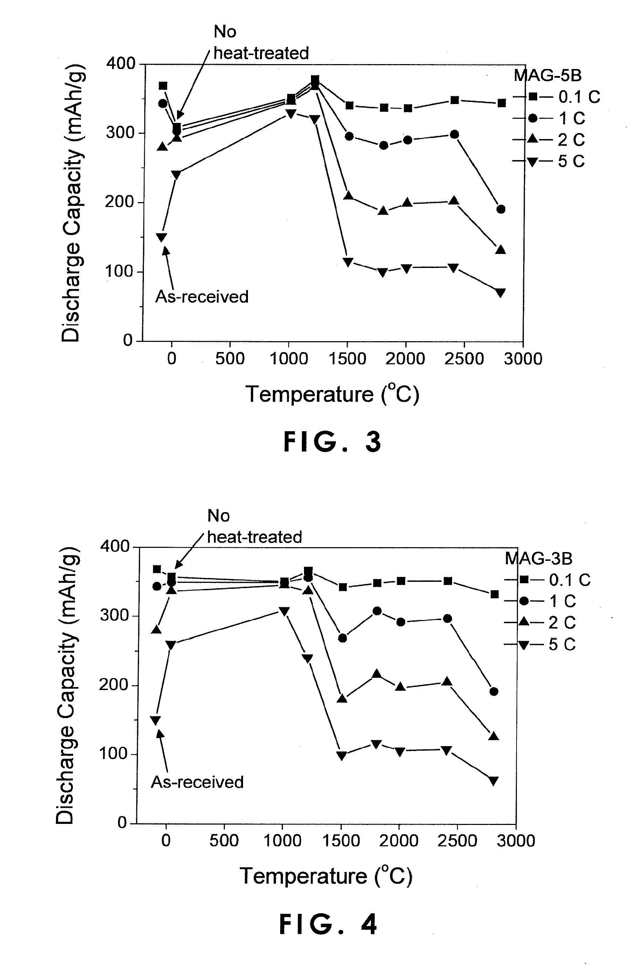

The relationship between the discharge capacity and each of the heat treatment temperatures was determined from the above-described results. The relationship between the discharge capacity and each of the heat treatment temperatures for each rate was as shown in Figs. 3 and 4. Fig. 3 is a graph for a sample having a e boron content of 5%, and Fig. 4 is a graph for a sample having a boron content of 3%.

From the above results, it was found that negative-electrode materials obtained by adding boric acid to graphite and heat-treating the mixture at room temperature to 1400°C had a structure in which boron atoms of a boron compound represented by HₓBO_{y} wherein x represents a real number of 0 to 1.0; and y represents a real number of 1.5 to 3.0 are bonded through a covalent bond to a portion of carbon atoms of graphite. Further, it was found that the negative-electrode materials obtained by heat treatment at room temperature to 1400°C had a high charge/discharge capacity and excellent rate characteristics.

### Example 2: Negative-electrode material using artificial graphite

An artificial graphite was obtained by heat-treating green coke (proportion of optical isotropic structure: not more than 25%) at 2800°C. The artificial graphite (HDPC) thus obtained had a carbon content of 99.90% and a lattice spacing (d₀₀₂) of 3.369 angstroms in the C-axis direction.

Boric acid (manufactured by Sigma-Aldrich Co.) was added in an amount of 3% in terms of the mass of boron atom to the artificial graphite, and the mixture was kneaded in a ball mill. In the same manner as in Example 1, the artificial graphite with boric acid mixed thereinto was heat-treated at 1000°C, 1200°C, 1500°C, 1800°C, 2000°C, 2400°C, and 2800°C to obtain negative-electrode materials.

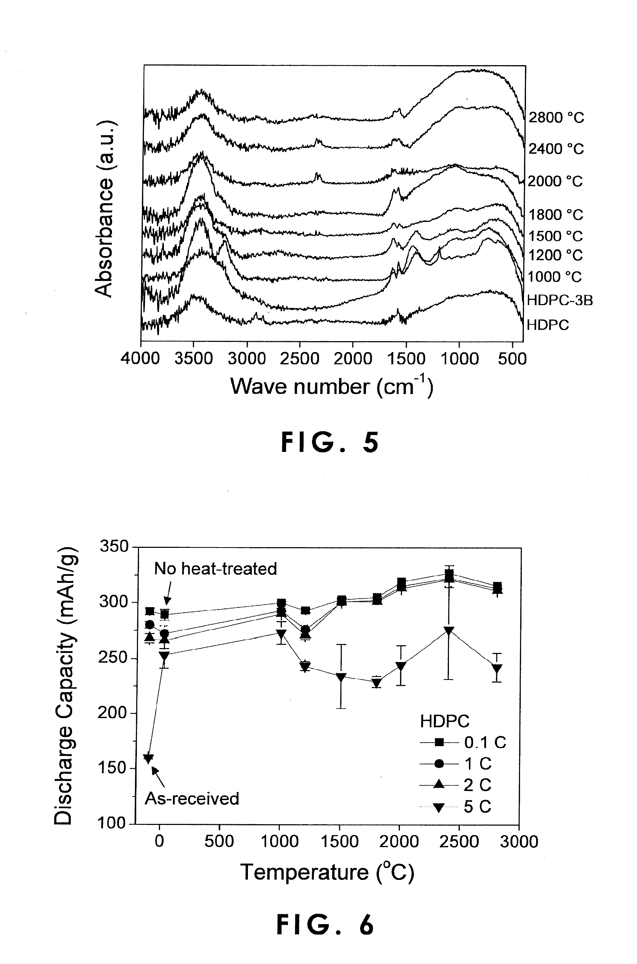

For the negative-electrode materials thus obtained, infrared spectral characteristics were measured with a Fourier transformation infrared spectrophotometer (FT-IR MB-series, manufactured by ABB Bomen Inc.). The results were as shown in Fig. 5. As is also apparent from Fig. 5, for the negative-electrode materials subjected to heat treatment at 1500°C or above, it was confirmed that a peak derived from O-H bond of boric acid (3226 cm⁻¹), a peak derived from B-O bond (1413 cm⁻¹), an in-plane peak derived from B-OH (1193 cm⁻¹), and an out-of-plane peak derived from B-OH (781 cm⁻¹) disappeared. On the other hand, for the negative-electrode materials subjected to heat treatment at 1500°C or below, a peak derived from B=O bond of boron oxide (1583 cm⁻¹) and a peak derived from B-C bond (1265 cm⁻¹) were confirmed.

Coin-type rechargeable batteries were prepared by preparing a working electrode from the negative-electrode material, preparing a counter electrode (CE) and a reference electrode (RE) from lithium metal, and using, as an electrolysis solution, a solution prepared by dissolving LiPF₆ as an electrolyte salt in a mixed solvent composed of ethylene carbonate and dimethyl carbonate at a ratio of 1 : 1 (concentration of electrolyte salt: 1 mol/dm³). Rate characteristics of the rechargeable batteries thus obtained were examined as follows.

For the rechargeable batteries thus obtained, a constant-current charge and discharge test was carried out. The discharge capacity was determined by charging the battery at a current density of 37.2 mA/g (corresponding to 0.1 C) until the potential against lithium reference electrode (vs Li/Li⁺) reaches 0.0 V, and then discharging the battery at the same current density until the potential against lithium reference electrode (vs Li/Li⁺) reaches +1.50 V. Further, the discharge capacity was determined in the same manner as described above, except that the current density was changed to 74.4 mA/g (corresponding to 0.2C), 186 mA/g (corresponding to 0.5C), 372 mA/g (corresponding to 1.0C), 744 mA/g (corresponding to 2.0C), and 1860 mA/g (corresponding to 5.0C). The results of evaluation were as shown in Table 3 below. The boron content in the table means a boron content in terms of the mass of boron atom based on the artificial graphite (HDPC).

**TABLE 3**

| Boron content (%) | Heat treatment temp. (°C) | Rate characteristics | | | | | |
|---|---|---|---|---|---|---|---|
| | | 0.1C | 0.2C | 0.5C | 1.0C | 2.0C | 5.0C |
| 0 | 25 | 292 | 288 | 285 | 280 | 268 | 160 |
| 3 | 25 | 289 | 284 | 277 | 272 | 266 | 253 |
| 3 | 1000 | 300 | 298 | 296 | 293 | 290 | 273 |
| 3 | 1200 | 293 | 288 | 282 | 276 | 271 | 243 |
| 3 | 1500 | 303 | 303 | 302 | 301 | 301 | 234 |
| 3 | 1800 | 305 | 304 | 303 | 302 | 301 | 229 |
| 3 | 2000 | 319 | 318 | 316 | 315 | 313 | 244 |
| 3 | 2400 | 327 | 326 | 324 | 322 | 321 | 276 |
| 3 | 2800 | 315 | 315 | 314 | 313 | 311 | 242 |

The relationship between the discharge capacity and each of the heat treatment temperatures was determined from the above-described results. The relationship between the discharge capacity and each of the heat treatment temperatures for each rate was as shown in Fig. 6.

### Example 3: Negative-electrode material using natural graphite

A product obtained by adding boric acid (manufactured by Sigma-Aldrich Co.) to a natural graphite having a carbon atom content of not less than 99.95% in terms of mass and a lattice spacing (d₀₀₂) of 3.361 angstroms in the C-axis direction and kneading the mixture in a ball mill was heat-treated for doping with boron. Boron doping amount was 3% in terms of the mass of boron atom based on the natural graphite. The natural graphite with boric acid mixed thereinto was heat-treated at 1000°C and 2800°C to obtain negative-electrode materials.

Coin-type rechargeable batteries were prepared by preparing a working electrode from the negative-electrode material, preparing a counter electrode (CE) and a reference electrode (RE) from lithium metal, and using, as an electrolysis solution, a solution prepared by dissolving LiPF₆ as an electrolyte salt in a mixed solvent composed of ethylene carbonate and dimethyl carbonate at a ratio of 1 : 1 (concentration of electrolyte salt: 1 mol/dm³). Rate characteristics of the rechargeable batteries thus obtained were examined as follows.

For the rechargeable batteries thus obtained, a constant-current charge and discharge test was carried out. The discharge capacity was determined by charging the battery at a current density of 37.2 mA/g (corresponding to 0.1C) until the potential against lithium reference electrode (vs Li/Li⁺) reached 0.0 V, and then discharging the battery at the same current density until the potential against lithium reference electrode (vs Li/Li⁺) reached +1.50 V. Further, the discharge capacity was determined in the same manner as described above, except that the current density was changed to 74.4 mA/g (corresponding to 0.2C), 186 mA/g (corresponding to 0.5C), 372 mA/g (corresponding to 1.0C), 744 mA/g (corresponding to 2.0C), and 1860 mA/g (corresponding to 5.0C). The results of evaluation were as shown in Table 4 below. The boron content in the table means a boron content in terms of the mass of boron atom based on the natural graphite (HDPC).

**TABLE 4**

| Boron content (%) | Heat treatment temp. (°C) | Rate characteristics | | | | | |
|---|---|---|---|---|---|---|---|
| | | 0.1C | 0.2C | 0.5C | 1.0C | 2.0C | 5.0C |
| 0 | 25 | 338 | 338 | 337 | 335 | 330 | 218 |
| 3 | 25 | 334 | 333 | 333 | 331 | 329 | 285 |
| 3 | 1000 | 334 | 333 | 332 | 331 | 330 | 299 |
| 3 | 2800 | 347 | 346 | 344 | 343 | 341 | 228 |

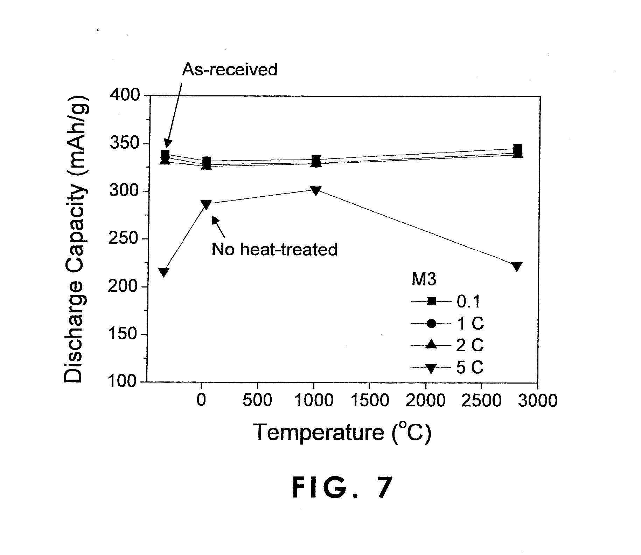

The relationship between the discharge capacity and each of the heat treatment temperatures was determined from the above-described results. As a result, the relationship between the discharge capacity and each of the heat treatment temperatures for each rate was as shown in Fig. 7.

## Claims

1. A negative-electrode material for rechargeable batteries with a nonaqueous electrolyte comprising:
a carbon material having a carbon atom content of not less than 98.0% in terms of mass and a lattice spacing (d₀₀₂) of not more than 3.370 angstroms in the C-axis direction; and
a boron compound represented by general formula HₓBO_{y} wherein x represents a real number of 0 to 1.0 and y represents a real number of 1.5 to 3.0,
wherein the boron compound is bonded to a portion of the carbon atoms of the carbon material.

2. The negative-electrode material for rechargeable batteries with a nonaqueous electrolyte according to claim 1, wherein the content of the boron compound is in the range of 0.1 to 5.0% in terms of the mass of boron atom based on the carbon material.

3. The negative-electrode material for rechargeable batteries with a nonaqueous electrolyte according to claim 1 or 2, wherein the carbon material is a natural graphite or an artificial graphite obtained by heat-treating a hydrocarbon compound at a temperature of 2000°C or above.

4. The negative-electrode material for rechargeable batteries with a nonaqueous electrolyte according to any one of claims 1 to 3, which has a structure that carbon atoms of the carbon material are bonded to oxygen atoms of the boron compound through a covalent bond.

5. A process for producing a negative-electrode material for rechargeable batteries with a nonaqueous electrolyte according to any one of claims 1 to 4, the process comprising:
mixing a carbon material having a carbon atom content of not less than 98.0% in terms of mass and a lattice spacing (d₀₀₂) of not more than 3.370 angstroms in the C-axis direction, with a boric acid and kneading the mixture; and
heat-treating the mixture at a temperature of room temperature to 1400°C.

6. The process according to claim 5, wherein the heat treatment is carried out under vacuum or an inert gas atmosphere.

7. The process according to claim 5 or 6, wherein the boric acid is dehydrated by the heat treatment to form a boron compound represented by general formula: HₓBO_{y} wherein x represents a real number of 0 to 1.0; and y represents a real number of 1.5 to 3.0.

8. A negative electrode for a rechargeable battery with a nonaqueous electrolyte, the negative electrode comprising a material obtained by a process according to claim 6 or 7.

9. A rechargeable battery with a nonaqueous electrolyte comprising:
a positive electrode; an electrolyte layer containing a nonaqueous electrolysis solution; and a negative electrode, wherein the negative electrode is a negative electrode according to claim 8.
